# NEUE EUROPÄISCHE PATENTSCHRIFT

(11) **EP 3 299 137 B2**
(45) Veröffentlichungstag und Bekanntmachung des Hinweises auf die Entscheidung über den Einspruch: **13.03.2024**
(45) Hinweis auf die Patenterteilung: 30.09.2020
(21) Anmeldenummer: 17186565.2
(22) Anmeldetag: 17.08.2017
(51) Int. Cl.: B27N 3/18, B27N 3/24, B30B 5/06, B30B 15/00, B08B 1/00, B08B 1/02, B08B 1/04, B65G 45/18

(54) **DOPPELBANDPRESSE UND VERFAHREN ZUM KONTINUIERLICHEN PRESSEN EINER HOLZWERKSTOFFMATTE ZUR BILDUNG EINER HOLZWERKSTOFFPLATTE ODER EINES LAMINATS**
DOUBLE BELT PRESS AND METHOD FOR THE CONTINUOUS PRESSING OF WOOD MATERIAL MAT FOR FORMING A COMPOSITE WOOD MATERIAL BOARD OR LAMINATE
PRESSE À DOUBLE BANDE ET PROCÉDÉ DE PRESSAGE CONTINU D'UNE NATTE EN MATÉRIAU DÉRIVÉ DU BOIS PERMETTANT LA FORMATION D'UNE PLAQUE EN MATÉRIAU DÉRIVÉ DU BOIS OU D'UN STRATIFIÉ

(30) Priorität: 29.08.2016 DE 102016116010
(43) Veröffentlichungstag der Anmeldung: 28.03.2018
(73) Patentinhaber: Fritz Egger GmbH & Co. OG, 6380 St. Johann in Tirol (AT)
(72) Erfinder: Daxer, Christian, 6372 Oberndorf (AT); Pletzenauer, Robert, 6391 Fieberbrunn (AT)
(74) Vertreter: Cohausz & Florack

(56) Entgegenhaltungen:
- EP-A2- 1 615 757
- DE-A1- 19 929 055
- DE-A1-102013 103 018
- DE-C1- 3 927 824
- SU-A1- 1 452 691
- US-A1- 2008 093 199

## Beschreibung

Die Erfindung betrifft eine Doppelbandpresse zum kontinuierlichen Pressen einer Holzwerkstoffmatte zur Bildung einer Holzwerkstoffplatte und/oder eines Laminats mit zwei zwischeneinander einen Pressspalt bildenden endlos um wenigstens zwei Umlenkmitteln umlaufenden Pressbändern, wobei die Pressbänder jeweils eine mit der Holzwerkstoffmatte und/oder dem Laminat in Kontakt kommende Außenseite und eine nicht mit der Holzwerkstoffmatte und/oder dem Laminat in Kontakt kommende Innenseite aufweisen. Ferner betrifft die Erfindung ein Verfahren zum kontinuierlichen Pressen einer Holzwerkstoffmatte zur Bildung einer Holzwerkstoffplatte und/oder eines Laminats, vorzugsweise mit einer Doppelbandpresse der genannten Art.

Holzwerkstoffplatten, die durch Pressen unter Wärmeeinwirkung gebildet werden, sind insbesondere Spanplatten, Faserplatten, wie mitteldichte Faserplatten (MDF-Platten) oder hochdichte Faserplatten (HDF-Platten), und OSB-Platten (Oriented Strand Board). Während bei Spanplatten beleimte Holzspäne verpresst werden, werden bei Faserplatten beleimte Fasern verpresst. Zuvor werden die entsprechenden Holzwerkstoffpartikel jedoch auf einem Förderband zu einer sogenannten Holzwerkstoffmatte aufgestreut. Man spricht in diesem Zusammenhang auch von einem Kuchen. Die Holzwerkstoffmatte kann vorgepresst werden und wird letztlich einer Doppelbandpresse zugeführt. Alternativ können auch Laminate durch Verpressen gebildet werden. Die Laminate weisen bedarfsweise eine Trägerschicht und wenigstens eine äußere Schicht auf, wobei die Schichten durch das Verpressen miteinander verbunden werden. Als Laminate kommen insbesondere solche in Betracht, bei denen die Trägerschicht durch eine Holzwerkstoffplatte gebildet wird. Die wenigstens eine äußere Schicht kann dabei bevorzugt als Nutzschicht und/oder Dekorschicht ausgebildet sein. Derartige Laminate können sogenannte CPL-Laminate (Continuous Pressure Laminate) sein. Im Falle von beispielsweise Fußbodenlaminaten, wird der Nutzschicht und/oder Dekorschicht gegenüberliegend eine sogenannte Gegenzugschicht gleichzeitig mit der Nutzschicht und/oder Dekorschicht mit der Holzwerkstoffplatte durch Verpressen verbunden. Die Nutzschicht und/oder Dekorschicht und die Gegenzugschicht können bedarfsweise wenigstens überwiegend aus harzgetränkten Papieren gebildet sein, die bedruckt sein können aber nicht müssen. Bei den Harzen kann es sich um Melaminharze oder Phenolharze handeln. Es kann aber auch auf dickere Trägerschichten, etwa in Form von Holzwerkstoffplatten, verzichtet werden. Es können beispielsweise mehrere Lagen von harzgetränkten Papieren miteinander verpresst werden, wobei dann ein als Kompaktlaminat bezeichnetes Laminat gebildet werden kann. Nachfolgend werden unter Laminat insbesondere die beschriebenen Materialien verstanden. Der Begriff Laminat kann also im Zusammenhang mit der vorliegenden Erfindung breit verstanden werden.

Die vorbeschriebenen Verfahren erfolgen typischerweise kontinuierlich. In der Doppelbandpresse laufen zwei endlose Pressbänder um, die typischerweise aus Stahl gebildet werden. Zwischen den Pressbändern bildet sich ein Pressspalt aus, in den die Holzwerkstoffmatte und/oder das Laminat eingeführt wird. Der Pressspalt wird dabei wenigstens im Einlaufbereich der Holzwerkstoffmatte und/oder des Laminats enger, wodurch die Holzwerkstoffmatte und/oder das Laminat auf das gewünschte Maß verdichtet wird. Da die Pressbänder beheizt sind, und zwar etwa durch Dampf oder Thermalöl, reagiert der auf den Holzspänen oder Holzfasern verteilte Leim und/oder das Verbindungsmittel zwischen den Schichten des Laminats aus und es entsteht eine die Doppelbandpresse verlassende, feste Holzwerkstoffplatte und/oder ein Laminat mit untrennbar verbundenen Schichten.

Bekannte Doppelbandpressen weisen neben den Pressbändern noch Pressplatten auf, wobei zwischen den Pressplatten und den Pressbändern an ihren Enden verbundene Rollstäbe oder Rollen vorgesehen sind, welche die Reibung zwischen den sich bewegenden Pressbändern und den statischen Pressplatten reduzieren und dennoch die Wärmeübertragung von den Pressplatten an die Pressbänder sicherstellen. Alternativ zu Rollstäben und Rollen werden auch Ölpolster eingesetzt. Entlang des Pressspalts sind mehrere Presszylinder und Heizsysteme vorgesehen, um die Temperatur und den Druck sowie die Breite des Pressspalts in Längsrichtung des Pressspalts variieren zu können. Die Presstemperatur liegt etwa zwischen 150 °C und 250 °C und die Dicke der Holzwerkstoffplatten beträgt typischerweise zwischen 1,5 mm und 60 mm. Die Holzwerkstoffplatten sind regelmäßig mehrere Meter breit und werden nach dem Verlassen der Doppelbandpresse in Einzelplatten geschnitten.

Beim Verpressen der Holzwerkstoffplatte und erhöhter Temperatur können Reste des Leims und/oder der Holzwerkstoffe sowie aus den Holzwerkstoffen austretende, insbesondere ausgasende, Komponenten beim Trennen der Pressbänder von der verpressten Holzwerkstoffplatte an den Pressbändern haften bleiben. Diese Anhaftungen werden mit den Pressbändern in den Einlaufbereich des Pressspalts und durch denselben hindurchbewegt, so dass die Anhaftungen mit der zugeführten Holzwerkstoffmatte in Kontakt kommen. Dabei können die Anhaftungen Vertiefungen in der entsprechenden Seite der Holzwerkstoffplatte verursachen oder sich vom Pressblech lösen und die Oberflächen der Holzwerkstoffplatte beeinträchtigen. Hinzu kommt, dass an den anhaftenden Pressrückständen leichter weitere Pressrückstände haften bleiben als an den sauberen Stellen der Pressbänder, so dass sich Pressrückstände an einigen Stellen des Pressbands ansammeln können. Das kann dazu führen, dass die Deckschicht der Holzwerkstoffplatte beim Pressen fleckenweise abgezogen wird. Zudem wird durch die Pressrückstände die Wärmeübertragung an die Holzwerkstoffplatte eingeschränkt.

Beim Verpressen eines Laminats, also den Schichten des Laminats zu einem zusammenhängenden Laminat, können ebenfalls Ausgasungen der Holzwerkstoffplatte, Bestandteile der äußeren Laminatschichten, etwa in Form von Harz, wie Melaminharz oder Phenolharz, oder andere Materialien an den Pressbändern haften bleiben.

Um diese Nachteile zu vermeiden, werden geeignete Holzwerkstoffe und geeignete Leime verwendet, wobei so wenig Leim wie möglich aber so viel Leim wie nötig eingesetzt wird. Des Weiteren werden geeignete Temperaturen und sehr glatte Pressbänder eingesetzt, welche die Neigung des Anhaftens von Rückständen verringern. Mit diesen Methoden werden zwar grundsätzlich recht gute Resultate erreicht. Es kann allerdings nicht sichergestellt werden, dass bestimmte Oberflächenanforderungen dauerhaft eingehalten werden und dass es zu keinem Ausschuss an qualitativ minderwertigen Holzwerkstoffplatten und/oder Laminaten kommt.

Die DE 39 27 824 C1 offenbart eine Doppelbandpresse, von der die Erfindung ausgeht.

Daher liegt der vorliegenden Erfindung die Aufgabe zugrunde, die Doppelbandpresse und das Verfahren jeweils der eingangs genannten und zuvor näher beschriebenen Art derart auszugestalten und weiterzubilden, dass Holzwerkstoffplatten und/oder Laminate zuverlässiger und mit einer höheren Oberflächenqualität hergestellt werden können.

Diese Aufgabe wird durch eine Doppelbandpresse nach Anspruch 1 gelöst.

Die genannte Aufgabe ist ferner gelöst durch ein Verfahren gemäß Anspruch 9.

Die Erfindung hat erkannt, dass die Zuverlässigkeit bei der Herstellung von Holzwerkstoffplatten und Laminaten sowie deren Qualität dadurch verbessert werden kann, dass die Außenseite wenigstens eines Pressbands durch eine Poliereinrichtung wenigstens teilweise von Ablagerungen befreit wird, und zwar an einer Stelle, nachdem die Außenseite des Pressbands von der Holzwerkstoffplatte und/oder dem Laminat getrennt aber noch nicht erneut mit der Holzwerkstoffmatte und/oder dem Laminat in Kontakt gebracht worden ist. Auf diese Weise kann erreicht werden, dass stets ein sauberes Stück des Pressbands zum Verpressen der Holzwerkstoffmatte und/oder des Laminats verwendet wird und/oder dass sich auf dem Pressband die Pressrückstände nicht ungehindert ansammeln können, sondern wenigstens teilweise wieder entfernt werden. Das Abtragen der Pressrückstände kann dabei kontinuierlich und/oder taktweise erfolgen, je nach der tatsächlichen Verschmutzung der Pressbänder. Zudem kann es ausreichen, die Pressrückstände wenigstens teilweise zu entfernen, um die gewünschte Qualität der Holzwerkstoffplatten sicherzustellen. Es ist beispielsweise wegen hohen Qualitätsanforderungen aber auch vorgesehen, dass das wenigstens eine Pressband mit Hilfe der Poliereinrichtung poliert wird. So werden sehr saubere und sehr glatte Oberflächen der Pressbänder erzielt, was zu sehr sauberen ebenen Oberflächen der Holzwerkstoffplatte und/oder des Laminats führt.

Der besseren Verständlichkeit halber und zur Vermeidung unnötiger Wiederholungen werden nachfolgend die Doppelbandpresse und das Verfahren gemeinsam beschrieben, ohne jeweils im Einzelnen zwischen der Doppelbandpresse und dem Verfahren zu unterscheiden. Für den Fachmann ist jedoch anhand des Kontextes jeweils ersichtlich, welches Merkmal in Bezug auf die Doppelbandpresse und das Verfahren jeweils bevorzugt ist.

Bei einer ersten besonders bevorzugten Ausgestaltung der Doppelbandpresse ist das wenigstens eine Pressband als Stahlband, insbesondere aus Edelstahl, ausgebildet. Bei derartigen Pressbändern ist die Neigung des Anhaftens von Pressrückständen an diesen Pressbändern gering. Pressbänder aus Stahl nutzen sich auch nicht so schnell ab, wenn die Ablagerungen in Form von Pressrückständen mechanisch mit Hilfe der wenigstens einen Poliereinrichtung entfernt werden. Edelstahl wird von den Pressrückständen zudem nicht angegriffen und behält lange eine glatte Oberfläche. Außerdem sind entsprechende Pressbänder hinreichende Wärmeleiter und ermöglichen eine gleichmäßige Temperaturverteilung beim Pressen. Es ist nämlich grundsätzlich bevorzugt, wenn die Doppelbandpresse zum kontinuierlichen Pressen und Beheizen einer Holzwerkstoffmatte zur Bildung einer Holzwerkstoffplatte und/oder eines Laminats ausgebildet ist. Dann können einfach und zuverlässig Holzwerkstoffplatten, wie etwa Spanplatten und Faserplatten, aus beleimten Holzwerkstoffpartikeln, wie beispielweise Spänen und/oder Fasern aus Holz, und/oder Laminate, wie beispielsweise Fußbodenlaminate oder Kompaktlaminate, mit der Doppelbandpresse gefertigt werden.

Besonders effektiv und zugleich schonend für das wenigstens eine Pressband ist es, dass die wenigstens eine Poliereinrichtung wenigstens ein rotierendes Poliermittel aufweist. Bedarfsweise können auch mehrere rotierende Poliermittel vorgesehen sein, und zwar insbesondere nebeneinander. Der Reinigungseffekt der Poliermittel kann besonders hoch sein, wenn die Umfangsgeschwindigkeit von Poliermittel und Pressband gegenläufig ausgerichtet sind. Das Poliermittel dreht sich dann entgegengesetzt zur Bewegungsrichtung des zugehörigen Pressbands.

Alternativ oder zusätzlich kann die wenigstens eine Poliereinrichtung quer zum Pressband verschiebbar vorgesehen sein. Dann kann die Poliereinrichtung entsprechend kompakt ausgebildet werden und dennoch das Pressband über dessen gesamte Breite reinigen, wenn auch nicht gleichzeitig, sondern sukzessive. Da die Verschmutzung der Pressbänder mit Pressrückständen schleichend erfolgt, ist es ausreichend, wenn immer nur ein kleiner Bereich bzw. schmaler Streifen des Pressbands von der Poliereinrichtung gereinigt wird. Mit der Zeit wird die Poliereinrichtung, etwa schrittweise oder kontinuierlich, über die gesamte Breite des Pressbands, wenigstens aber über die gesamte zu bearbeitende Breite des Pressbands, bewegt. Die einzelnen Abschnitte des Pressbands werden dann in entsprechenden zeitlichen Abständen gesäubert, also von Anhaftungen wenigstens teilweise befreit.

Um einen zuverlässigen Betrieb bei konstruktiv geringem Aufwand zu erreichen, kann wenigstens ein motorischer Antrieb zum Verschieben der Poliereinrichtung quer zum Pressband vorgesehen sein. Wenigstens ein motorischer Antrieb zum Antrieb eines Poliermittels ist vorgesehen. Der wenigstens eine motorische Antrieb zum Antrieb eines Poliermittels mit der Poliereinrichtung wird quer zum Pressband verschoben. So kann der Antrieb des Poliermittels unabhängig von der Position der Poliereinrichtung erfolgen. Zusätzlich kann aber der wenigstens eine motorische Antrieb zum Verschieben der Poliereinrichtung ortsfest vorgesehen sein. Dann kann der konstruktive Aufwand eingespart werden, der dafür erforderlich wäre, den entsprechenden motorischen Antrieb zusammen mit der Poliereinrichtung quer zum Pressband zu verschieben.

Um die Poliereinrichtung und/oder einen motorischen Antrieb in einfacher und zuverlässiger Weise quer zu einem Pressband zu verschieben, kann eine sich quer zu dem entsprechenden Pressband erstreckende Führungsschiene vorgesehen sein, die die Poliereinrichtung und/oder einen motorischen Antrieb beim Verschieben quer zum Stahlband führt. So kann das Verschieben der Poliereinrichtung und/oder des motorischen Antriebs hin und zurück in reproduzierbarer Weise durchgeführt werden. Hinsichtlich des Antriebs der Poliereinrichtung entlang der Führungsschiene kann wenigstens ein motorischer Antrieb mit der Führungsschiene zusammenwirken. Dabei kann der wenigstens eine motorische Antrieb wahlweise entlang der Führungsschiene verschoben oder ortsfest zur Führungsschiene angeordnet sein.

Um eine gute und das Pressband schonende Reinigung zu gewährleisten, kann es sich anbieten, wenn die Geschwindigkeit der Verschiebung der Poliereinrichtung, die Rotationsgeschwindigkeit des Poliermittels und/oder der Anpressdruck eines Poliermittels gegen das Pressband einstellbar sind. Die entsprechenden Parameter können dabei bedarfsweise händisch variieren oder aber über eine Steuerung vorgegeben werden, die dann mittels Aktuatoren für die korrekte und automatische Einstellung der entsprechenden Parameter sorgen.

Der bei der Reinigung des wenigstens einen Pressbands anfallende Abrieb soll nicht die Doppelbandpresse oder das Pressen der Holzwerkstoffmatte und/oder des Laminats beeinträchtigen. Daher bietet es sich an, wenn ein Poliermittel der Poliereinrichtung einer Absaughaube zugeordnet, insbesondere wenigstens teilweise in der Absaughaube angeordnet, ist. Aus der Absaughaube kann dann, vorzugsweise kontinuierlich, ein Luftstrom abgesaugt werden, der den beim Entfernen der Pressrückstande anfallenden Abrieb mitreißt. Der Abrieb kann dann an geeigneter Stelle gesammelt und bedarfsweis entsorgt werden. Zum Absaugen von Luft aus der Absaughaube ist es zweckmäßig, einen Absaugstutzen an der Absaughaube anzubringen oder wenigstens mit dieser zu verbinden. Der Luftstrom zum Absaugen kann vorzugsweise mit einem handelsüblichen Gebläse erzeugt werden.

Da die sich mit der Zeit an den Pressbändern ansammelnden Ablagerungen nachteilig auswirken, egal ob die Pressrückstände am unteren Pressband oder am oberen Pressband der Doppelbandpresse anhaften, kann jedem Pressband außerhalb des Pressspalts wenigstens eine die Außenseite des jeweiligen Stahlbands polierende Poliereinrichtung zugeordnet sein. Darauf kann jedoch der Kosten halber verzichtet werden, wenn beispielsweise nur hinsichtlich einer Oberfläche der Holzwerkstoffplatte und/oder des Laminats hohe Qualitätsanforderungen gestellt werden.

Bei einer ersten besonders bevorzugten Ausgestaltung des Verfahrens wird die Holzwerkstoffmatte zur Bildung der Holzwerkstoffplatte und/oder das Laminat kontinuierlich gepresst und beheizt. Dann können einfach und zuverlässig Holzwerkstoffplatten, wie etwa Spanplatten und Faserplatten, aus beleimten Holzwerkstoffpartikeln, wie beispielsweise Spänen und/oder Fasern aus Holz, oder Laminate, insbesondere Fußbodenlaminate umfassend eine Nutz- und Dekorschicht, eine Holzwerkstoffplatte als Trägerschicht und eine der Nutz- und Dekorschicht gegenüber angeordnete Gegenzugschicht oder Kompaktlaminate aus harzgetränkten Papieren, mit der Doppelbandpresse gefertigt werden.

Insbesondere der Einfachheit halber und zur Schonung des Pressbands wird die Außenseite des wenigstens einen Pressbands zum Abtragen der Pressrückstände und zum Polieren mit einem rotierenden Poliermittel bearbeitet. Das wenigstens teilweise Abtragen von Pressrückständen kann noch leichte Verunreinigungen am Pressband zurücklassen und/oder die Oberfläche des Pressbands ist nach der Bearbeitung durch die Poliereinrichtung aufgeraut. Insbesondere um nach der Behandlung des Pressbands mit der wenigstens einen Poliereinrichtung wenigstens an dem gerade bearbeiteten Abschnitt des Pressbands eine saubere und glatte Oberfläche zu erhalten, wird das Pressband poliert. Das Pressband behält dabei wenigstens im Wesentlichen die Oberflächeneigenschaften, wie insbesondere Glätte und Sauberkeit, eines neuwertigen Pressbands bei.

Um nach und nach das gesamte Pressband, zumindest die mit der Holzwerkstoffmatte und/oder dem Laminat in Kontakt kommende Breite des Pressbands, mit der Poliereinrichtung zu bearbeiten bzw. zu säubern, kann die wenigstens eine Poliereinrichtung zur Bearbeitung des wenigstens einen Pressbands in wenigstens einer Richtung quer zum Pressband verschoben werden. Währenddessen bearbeitet die Poliereinrichtung das Pressband kontinuierlich oder schrittweise. Anschließend muss die Poliereinrichtung bedarfsweise wieder in die Ausgangstellung gebracht werden, um einen weiteren Reinigungszyklus zu beginnen. Wie die Poliereinrichtung wieder in die Ausgangsstellung gelangt, kann ebenso von untergeordneter Bedeutung sein, wie die Frage, ob die Poliereinrichtung dabei weiter an dem Pressband zur Anlage kommt. Besonders einfach und effizient ist die Reinigung des entsprechenden Pressbands, wenn die Poliereinrichtung quer zum Pressband hin und zurück verschoben wird. Dabei kann die Poliereinrichtung bedarfsweise durchgängig mit dem Pressband in Kontakt bleiben und dieses bearbeiten. Die Richtung, in der die Poliereinrichtung quer zum Pressband verschoben wird, ist vorzugsweise senkrecht zur Transportrichtung des Pressbands im Bereich der Poliereinrichtung vorgesehen. Das führt zu einem effizienten Reinigen des Pressbands.

Das Verschieben der Poliereinrichtung quer zum Pressband kann im Übrigen über wenigstens einen, insbesondere ortsfesten, motorischen Antrieb erfolgen. Dies ist zuverlässig und zudem konstruktiv einfach. Alternativ oder zusätzlich kann die Poliereinrichtung entlang einer die Poliereinrichtung führende und bedarfsweise auch haltende Führungsschiene verschoben werden, um eine definierte und reproduzierbare Bewegung der Poliereinrichtung quer zum entsprechenden Pressband zu erreichen. Dabei kann weiter der Einfachheit halber ein motorischer Antrieb zum Verschieben der Poliermaschine mit der Führungsschiene zusammenwirken. Das Poliermittel wird über wenigstens einen quer zum Pressband verschiebbaren motorischen Antrieb angetrieben. Dies ist konstruktiv einfach und gewährleistet zudem einen gleichmäßigen Antrieb des Poliermittels unabhängig vom Verschieben der Poliereinrichtung quer zum zugehörigen Pressband.

Um eine Verschmutzung der Doppelbandpresse, der zu pressenden Holzwerkstoffmatte und/oder des zu pressenden Laminats zu vermeiden, bietet es sich an, den bei der Reinigung des wenigstens einen Pressbands anfallenden Abrieb abzuführen und separat zu entsorgen. Zu diesem Zweck kann vorzugsweise der erzeugte Abrieb wenigstens teilweise über eine Absaughaube abgesaugt werden. Zum Absaugen wird zudem der Einfachheit halber ein Luftstrom verwendet, der bedarfsweise über einen mit der Absaughaube verbundenen Absaugstutzen abgesaugt wird.

Um beide Pressbänder, insbesondere gleichermaßen, vor einer zunehmenden Verschmutzung durch Pressrückstände zu schützen, bietet es sich an, die Pressbänder wenigstens im Wesentlichen gleichermaßen zu reinigen. Dies kann erfolgen, indem die an den Außenseiten beider Pressbänder anhaftenden Pressrückstände außerhalb des Pressspalts von jeweils wenigstens einer Poliereinrichtung wenigstens teilweise abgetragen werden. Um möglichst saubere und ebene Pressbänder zu erreichen, können die Außenseiten der Pressbänder von der jeweils wenigstens einen Poliereinrichtung poliert werden.

Nachfolgend wird die Erfindung anhand einer lediglich ein Ausführungsbeispiel darstellenden Zeichnung näher erläutert. In der Zeichnung zeigt
- Fig. 1: eine erfindungsgemäße Doppelbandpresse beim Verpressen einer Holzwerkstoffmatte zu einer Holzwerkstoffplatte in einer schematischen vertikalen Schnittansicht längs zur Doppelbandpresse,
- Fig. 2: eine Poliereinrichtung der Doppelbandpresse aus Fig. 1 in einer perspektivischen Ansicht
- Fig. 3: die Poliereinrichtung aus Fig. 2 in einer Seitenansicht,
- Fig. 4: die Poliereinrichtung aus Fig. 2 in einer Ansicht von unten und
- Fig. 5: den Antrieb des Poliermittels der Poliereinrichtung aus Fig. 2 in einer perspektivischen Detailansicht.

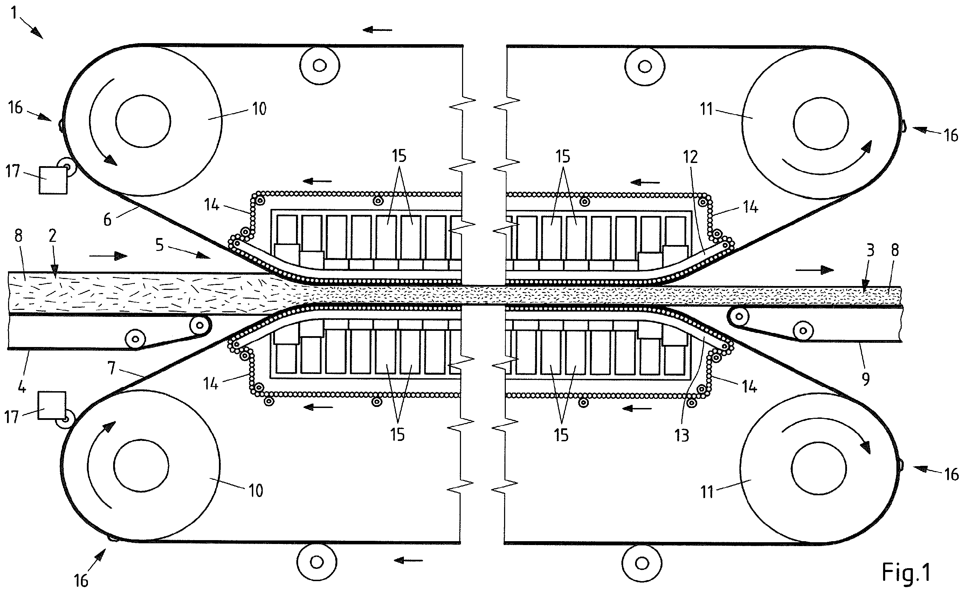

In der Fig. 1 ist eine Doppelbandpresse 1 zum Pressen und Beheizen einer Holzwerkstoffmatte 2 zur Bildung einer Holzwerkstoffplatte 3 dargestellt. Die Doppelbandpresse könnte aber grundsätzlich auch zum Verpressen eines Laminats ausgebildet sein. Die dargestellte und insoweit bevorzugte Doppelbandpresse 1 presst wahlweise eine Matte aus beleimten Holzspänen zu einer Spanplatte oder zu einer OSB-Platte oder eine Matte aus beleimten Holzfasern zu einer Faserplatte. Die Holzwerkstoffmatte 2 wird der Doppelbandpresse 1 mit einer vergleichsweise großen Schichtdicke auf einem Förderband 4 zugeführt. In der Doppelbandpresse 1 gelangt die Holzwerkstoffmatte 2 in einen Pressspalt 5 zwischen einem oberen Pressband 6 und einem unteren Pressband 7, die beide mit ihren Außenseiten die Holzwerkstoffmatte 2 zusammendrücken und diese bis zu der gewünschten Dicke der herzustellenden Holzwerkstoffplatte 3 komprimieren. Die Pressbänder 6,7 sind beheizt und übertragen Wärme an den den Pressspalt 5 der Doppelbandpresse 1 passierenden Holzwerkstoff 8. Die von dem Holzwerkstoff 8 aufgenommene Wärme führt zu einem raschen Abbinden und/oder Aushärten des auf den Holzwerkstoffpartikeln aufgetragenen Leims, so dass eine komprimierte feste Holzwerkstoffplatte 3 gebildet wird, die den Pressspalt 5 auf der Rückseite der Doppelbandpresse 1 verlässt und von einem Förderband 9 übernommen wird. Die so gebildete endlose Holzwerkstoffplatte 3 wird anschließend zu Einzelplatten zerschnitten.

Die Pressbänder 6,7 der dargestellten und insoweit bevorzugten Doppelbandpresse 1 laufen um vordere Umlauftrommeln 10 und hintere Umlauftrommeln 11 endlos um. Angrenzend zu dem Pressspalt 5 sind zwischen den ortsfesten Pressplatten 12,13 und den zugehörigen Pressbändern 6,7 miteinander verbundene Rollstäbe 14 vorgesehen. Diese Rollstäbe 14 rollen mit den Pressbändern 6,7 entlang der Pressplatten 12,13 in der Transportrichtung der Holzwerkstoffmatte 2, um Reibungsverluste zu verringern. Die Pressplatten 12,13 werden beispielweise mittels Thermalöl beheizt und über Andruckzylinder 15 in Richtung des Pressspalts 5 gepresst. Dabei sind der Anpressdruck und die Temperatur entlang des Pressspalts 5 einstellbar. Zu diesem Zweck können die Pressplatten 12,13 in Pressplattensegmente geteilt sein, die unterschiedlich stark beheizt und über separate Andruckzylinder 15 unterschiedlich stark gegen das Holzmaterial 8 im Pressspalt 5 gedrückt werden können. Das Verpressen der Holzwerkstoffmatte 2 erfolgt beispielsweise bei Temperaturen zwischen 150°C und 250°C, insbesondere zwischen 200°C und 250°C, zu Holzwerkstoffplatten 3 mit Dicken beispielsweise zwischen 1,5 mm und 60 mm.

Beim Pressen der Holzwerkstoffmatte 2 können aus dem Holzwerkstoff 8 unter Umständen Stoffe und/oder Komponenten austreten, insbesondere ausgasen, die wenigstens teilweise an den Pressbändern 6,7 haften bleiben. Es können aber auch Teile des an der Oberfläche der Holzwerkstoffplatte 3 vorgesehenen Leims an den Pressbändern 6,7 haften bleiben. Zudem ist es möglich, dass die Holzwerkstoffe 8 als solche und/oder eingebunden in den Leim an den Außenseiten der Pressbänder 6,7 haften bleiben. Die entsprechenden Anhaftungen in Form von der besseren Anschaulichkeit halber stark vergrößert dargestellten Pressrückständen 16 werden mit den Pressbändern 6,7 zurück in Richtung des vorderen Endes des Pressspalts 5 bewegt. Auf diesem Weg wird jedes Pressband 6,7 der dargestellten und insoweit bevorzugten Doppelbandpresse 1 an einer Poliereinrichtung 17 vorbeigeführt, die an den Pressbändern 6,7 anhaftende Pressrückstände 16 wenigstens teilweise entfernt.

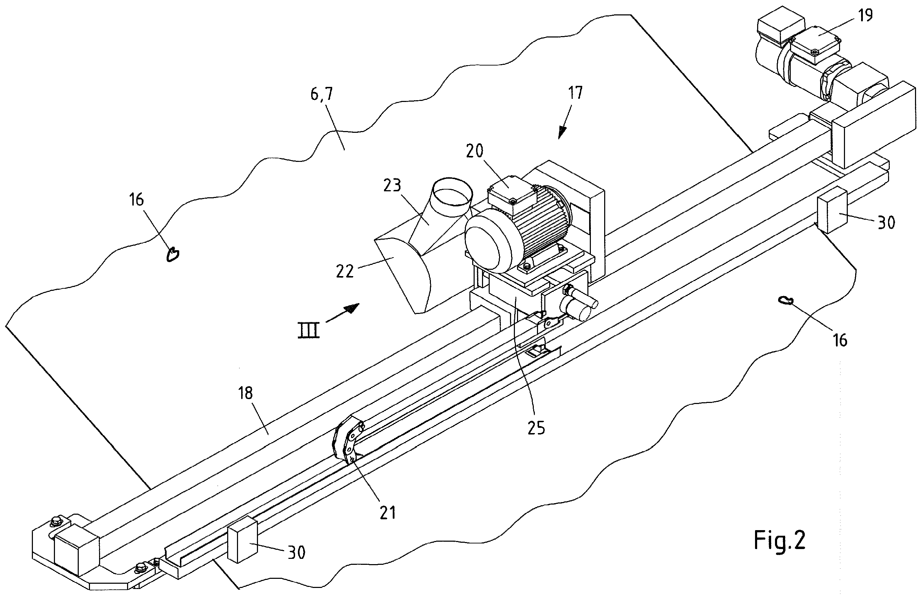

Die in der Fig. 2 näher dargestellten und insoweit bevorzugten Poliereinrichtungen 17 werden langsam von einem Rand des zugehörigen Pressbands 6,7 zum gegenüberliegenden Rand des Pressbands 6,7 und wieder zurück verschoben. Anschließend beginnt das Verschieben der Poliereinrichtungen 17 quer zu den Pressbändern 6,7 erneut. Währenddessen reinigen die Poliereinrichtungen 17 die Bereiche der Pressbänder 6,7, die an den Poliereinrichtungen 17 vorbeigeführt werden. Die Poliereinrichtungen 17 sind dabei an einer Führungsschiene 18 gehalten entlang derer die Poliereinrichtung 17 hin und her verschoben wird. Das Verschieben der Poliereinrichtung 17 wird durch einen motorischen Antrieb 19 bewirkt, der ortsfest mit einem Ende der Führungsschiene 18 verbunden ist. Zur Umkehr der Bewegungsrichtung der Poliereinrichtung 17 können bedarfsweise Endschalter 30 oder Näherungsschalter an der Führungsschiene 18 vorgesehen sein, die das Erreichen einer Endposition der Poliereinrichtung 17 detektieren und ein entsprechendes Signal an eine Steuereinrichtung weiterleiten. Die eigentliche Poliereinrichtung 17 wird über einen weiteren motorischen Antrieb 20 angetrieben, der mit der Poliereinrichtung 17 entlang der Führungsschiene 18 verschoben wird. Zur Spannungsversorgung dieses weiteren motorischen Antriebs 20 ist eine entsprechende elektrische Verbindung 21 vorgesehen. Der beim Reinigen des Pressbands 6,7 anfallende Abrieb wird über eine Absaughaube 22 und einen Absaugstutzen 23 abgesaugt.

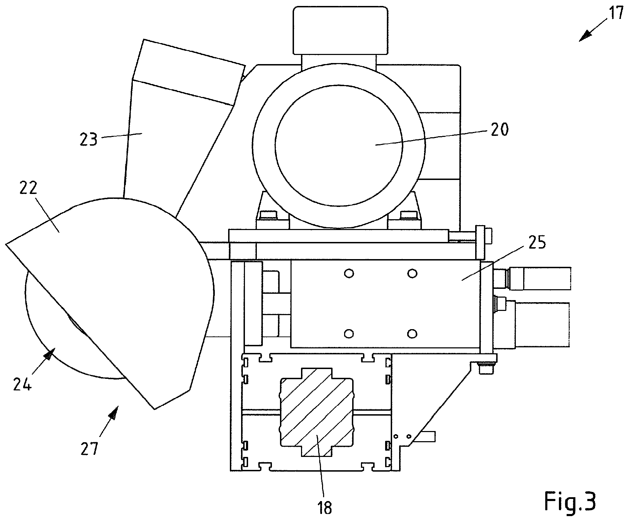

In der Fig. 3 ist die Poliereinrichtung 17 in einer Seitenansicht dargestellt. Links ist das überwiegend in der Absaughaube 22 angeordnete Poliermittel 24 dargestellt, das in Kontakt mit dem Pressband 6,7 steht. Zur Entfernung von an dem Pressband 6,7 anhaftenden Pressrückständen 16 wird das Poliermittel 24 um eine Drehachse wenigstens etwa parallel zum Pressband 6,7 gedreht und zwar in eine Richtung die entgegengesetzt zur Transportrichtung des Pressbands 6,7 im Bereich der Poliereinrichtung 17 ist. An den Absaugstutzen 23 kann ein Schlauch oder eine Leitung angeschlossen sein, über den/die die abgesaugte Luft zusammen mit dem angesaugten Abrieb aus der Absaughaube 22 abgesaugt wird. Die Führungsschiene 18 ist bei der dargestellten und insoweit bevorzugten Poliereinrichtung 17 wenigstens im Wesentlichen parallel zur Drehachse des Poliermittels 24 vorgesehen. An der Führungsschiene 18 ist ein Führungsschlitten 25 gehalten, der sowohl den motorischen Antrieb 20 für das Poliermittel 24 als auch das Poliermittel 24 und die Absaughaube 22 mit dem Absaugstutzen 23 trägt.

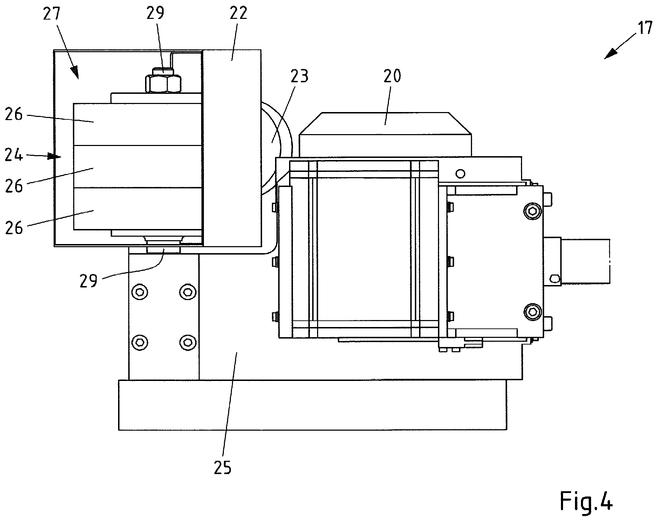

In der Fig. 4 ist die Poliereinrichtung 17 in einer Ansicht von unten dargestellt. Das dargestellte und insoweit bevorzugte Poliermittel 24 setzt sich aus drei nebeneinander vorgesehenen Polierscheiben 26 zusammen, die im Falle des Verschleißes einzeln oder zusammen ersetzt werden können. Die Absaughaube 22 weist eine Öffnung 27 auf, die groß genug ist, um einen zuverlässigen Kontakt zwischen dem Pressband 6,7 und dem Poliermittel 24 zu ermöglichen. Allerdings ist die Öffnung 27 der Absaughaube 22 auch klein genug, um einen solch starken Luftstrom zu erzeugen, dass dieser den beim Reinigen des Pressbands 6,7 in Form kleiner Partikel anfallenden Abrieb mitreißt und über den Absaugstutzen 23 abführen bzw. absaugen kann.

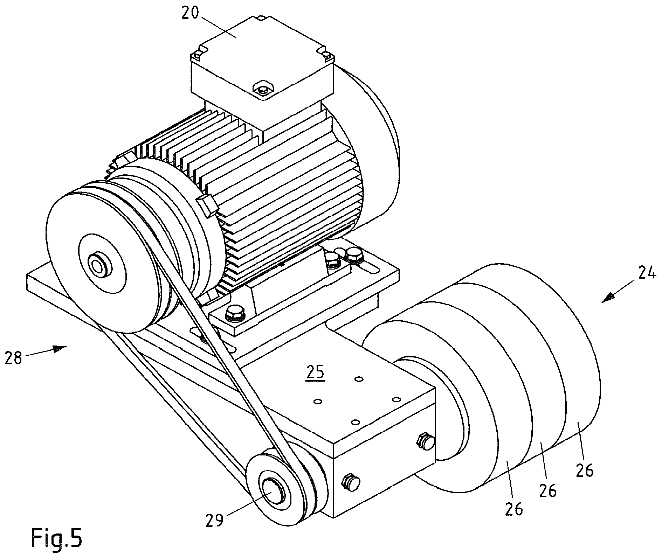

In der Fig. 5 ist im Detail der Antrieb des Poliermittels 24 der Poliereinrichtung 17 dargestellt. Der motorische Antrieb 20 ist über einen Riementrieb 28 mit einer Welle 29 verbunden, auf der die Polierscheiben 26 des Poliermittels 24 angeordnet sind. Das Poliermittel 24 ist wenigstens im Wesentlichen konzentrisch und rotationssymmetrisch zu der das Poliermittel 24 tragenden Welle 29 ausgebildet. Sowohl die Welle 29 mit dem Poliermittel 24 als auch der motorische Antrieb 20 ist an dem Führungsschlitten 25 der Poliereinrichtung 17 festgelegt, der entlang der Führungsschiene 18 und quer zum Pressband 6,7 hin- und herbewegt wird. Bei der dargestellten und insoweit bevorzugten Poliereinrichtung 17 erfolgt diese Verschiebung der Poliereinrichtung 17 langsam aber kontinuierlich, so dass alle Bereiche des zugeordneten Pressbands 6,7 in ausreichenden Zeitabständen vom Poliermittel 24 wenigstens teilweise poliert werden. Alternativ könnte die Poliereinrichtung 17 aber auch schrittweise entlang der Führungsschiene 18 verschoben werden. Dabei könnte auch vorgesehen sein, dass das Poliermittel 24 nur taktweise in Kontakt mit dem zugehörigen Pressband 6,7 gelangt. So kann bedarfsweise ein übermäßiger Abrieb des Pressbands 6,7 selbst vermieden werden.

### Bezugszeichenliste

- 1: Doppelbandpresse
- 2: Holzwerkstoffmatte
- 3: Holzwerkstoffplatte
- 4: Förderband
- 5: Pressspalt
- 6: Pressband
- 7: Pressband
- 8: Holzwerkstoff
- 9: Förderband
- 10, 11: Umlauftrommeln
- 12, 13: Pressbleche
- 14: Rollstäbe
- 15: Andruckzylinder
- 16: Pressrückstände
- 17: Poliereinrichtung
- 18: Führungsschiene
- 19, 20: motorischer Antrieb
- 21: elektrische Verbindung
- 22: Absaughaube
- 23: Absaugstutzen
- 24: Poliermittel
- 25: Führungsschlitten
- 26: Polierscheiben
- 27: Öffnung
- 28: Riementrieb
- 29: Welle
- 30: Endschalter

## Patentansprüche

1. Doppelbandpresse (1) zum kontinuierlichen Pressen einer Holzwerkstoffmatte (2) zur Bildung einer Holzwerkstoffplatte (3) und/oder eines Laminats mit zwei zwischeneinander einen Pressspalt (5) bildenden endlos um wenigstens zwei Umlenkmittel umlaufenden Pressbändern (6,7), wobei die Pressbänder (6,7) jeweils eine mit der Holzwerkstoffmatte (2) und/oder dem Laminat in Kontakt kommende Außenseite und eine nicht mit der Holzwerkstoffmatte (2) und/oder dem Laminat in Kontakt kommende Innenseite aufweisen,
**dadurch gekennzeichnet, dass**
wenigstens eine von der Außenseite wenigstens eines Pressbands (6,7) außerhalb des Pressspalts (5) wenigstens einen Teil der Pressrückstände (16) abtragende, die Außenseite des Pressbands (6,7) polierende, rotierende Poliermittel (24) aufweisende Poliereinrichtung (17) vorgesehen ist und dass wenigstens ein quer zum Pressband (6,7) verschiebbarer motorischer Antrieb (20) zum Antrieb eines Poliermittels (24) der Poliereinrichtung (17) vorgesehen ist.

2. Doppelbandpresse nach Anspruch 1,
**dadurch gekennzeichnet, dass**
das wenigstens eine Pressband (6,7) als Stahlband, insbesondere aus Edelstahl, ausgebildet ist und/oder dass die Doppelbandpresse (1) zum kontinuierlichen Pressen und Beheizen einer Holzwerkstoffmatte (2) zur Bildung einer Holzwerkstoffplatte (3) und/oder eines Laminats ausgebildet ist.

3. Doppelbandpresse nach Anspruch 1 oder 2,
**dadurch gekennzeichnet, dass**
die wenigstens eine Poliereinrichtung (17) quer zum Pressband (6,7) verschiebbar vorgesehen ist.

4. Doppelbandpresse nach einem der Ansprüche 1 bis 3,
**dadurch gekennzeichnet, dass**
wenigstens ein, insbesondere ortsfester, motorischer Antrieb (19) zum Verschieben der Poliereinrichtung (17) quer zum Pressband (6,7) vorgesehen.

5. Doppelbandpresse nach Anspruch 3 oder 4,
**dadurch gekennzeichnet, dass**
quer zu einem Pressband (6,7) eine Führungsschiene (18) zum Verschieben einer Poliereinrichtung (61) quer zum Pressband (6,7) vorgesehen ist und, vorzugsweise, dass der wenigstens eine motorische Antrieb (19) zum Verschieben der Poliereinrichtung (17) quer zum Pressband (6,7) mit der Führungsschiene (18) zusammenwirkt.

6. Doppelbandpresse nach einem der Ansprüche 3 bis 5,
**dadurch gekennzeichnet, dass**
die Geschwindigkeit der Verschiebung der Poliereinrichtung (17), die Rotationsgeschwindigkeit des Poliermittels (24) und/oder der Anpressdruck eines Poliermittels (24) gegen das Pressband (6,7) einstellbar sind.

7. Doppelbandpresse nach einem der Ansprüche 1 bis 6,
**dadurch gekennzeichnet, dass**
ein Poliermittel (24) der Poliereinrichtung einer Absaughaube (22) zugeordnet, insbesondere wenigstens teilweise in der Absaughaube (22) angeordnet, ist und, vorzugsweise, dass die Absaughaube (22) mit einem Absaugstutzen (23) zum Absaugen des Abriebs aus der Absaughaube (22) vorgesehen ist.

8. Doppelbandpresse nach einem der Ansprüche 1 bis 7,
**dadurch gekennzeichnet, dass**
jedem Pressband (6,7) außerhalb des Pressspalts (5) zugeordnet wenigstens eine die Außenseite des jeweiligen Pressbands (6,7) polierende Poliereinrichtung (17) vorgesehen ist.

9. Verfahren zum kontinuierlichen Pressen und Beheizen einer Holzwerkstoffmatte (2) zur Bildung einer Holzwerkstoffplatte (3) und/oder eines Laminats, mit einer Doppelbandpresse (1) nach einem der Ansprüche 1 bis 8,
- bei dem die Holzwerkstoffmatte (2) und/oder das Laminat in einen zwischen zwei endlos um wenigstens zwei Umlenkmittel umlaufenden Pressbändern (6,7) gebildeten Pressspalt (5) zugeführt wird,
- bei dem die Holzwerkstoffmatten (2) und/oder das Laminat mit den Außenseiten der Pressbänder (6,7) in Kontakt kommen und gepresst werden,
- bei dem wenigstens eine Poliereinrichtung (17) mit einem rotierenden Poliermittel (24) außerhalb des Pressspalts (5) die an der Außenseite wenigstens eines Pressbands (6,7) anhaftenden Pressrückstände (16) wenigstens teilweise abträgt und die Außenseite des Pressbands (6,7) poliert und
- bei dem das Poliermittel (24) über wenigstens einen quer zum Pressband (6,7) verschiebbaren motorischen Antrieb (20) angetrieben wird.

10. Verfahren nach Anspruch 9,
bei dem die Holzwerkstoffmatte (2) zur Bildung der Holzwerkstoffplatte (3) und/oder das Laminat kontinuierlich gepresst und beheizt wird.

11. Verfahren nach Anspruch 9 oder 10,
- bei dem die wenigstens eine Poliereinrichtung (17) zur Bearbeitung des wenigstens einen Pressbands (6,7) in wenigstens einer Richtung, vorzugsweise hin und zurück, quer zum Pressband (6,7) verschoben wird.

12. Verfahren nach einem der Ansprüche 9 bis 11,
- bei dem das Verschieben der Poliereinrichtung (17) quer zum Pressband (6,7) über wenigstens einen, insbesondere ortsfesten, motorischen Antrieb (19) bewirkt wird und/oder
- bei dem die Poliereinrichtung (17) entlang einer die Poliereinrichtung (17) führenden, insbesondere haltenden, vorzugsweise mit dem motorischen Antrieb (19) zusammenwirkenden Führungsschiene (18) verschoben wird.

13. Verfahren nach einem der Ansprüche 9 bis 12,
bei dem der von der Poliereinrichtung (17) erzeugte Abrieb, wenigstens teilweise über eine Absaughaube (22) und, vorzugsweise einen der Absaughaube (22) zugeordneten Absaugstutzen (23), abgesaugt wird.

14. Verfahren nach einem der Ansprüche 9 bis 13,
- bei dem die an den Außenseiten beider Pressbänder (6,7) anhaftenden Pressrückstände (16) außerhalb des Pressspalts (5) von jeweils wenigstens einer Poliereinrichtung (17) wenigstens teilweise abgetragen werden und
- bei dem vorzugsweise die Außenseiten der Pressbänder (6,7) von der jeweils wenigstens einen Poliereinrichtung (17) poliert werden.

## Claims

1. Double belt press (1) for continuously pressing a wood material mat (2) in order to form a wood material plate (3) and/or a laminate having two pressing belts (6, 7) which form a pressing gap (5) between each other and which run continuously around at least two redirection means, wherein the pressing belts (6, 7) each have an outer side which comes into contact with the wood material mat (2) and/or the laminate and an inner side which does not come into contact with the wood material mat (2) and/or the laminate,
**characterised in that**
there is provided at least one polishing device (17) which removes at least a portion of the pressing residues (16) from the outer side of at least one pressing belt (6, 7) outside the pressing gap (5) and which polishes the outer side of the pressing belt (6, 7) and which has rotating polishing means (24) and **in that** at least one motorised drive (20), which can be displaced transversely relative to the pressing belt (6, 7), is provided for driving a polishing means (24) of the polishing device (17).

2. Double belt press according to claim 1,
**characterised in that**
the at least one pressing belt (6, 7) is constructed as a steel belt, in particular from highgrade steel, and/or **in that** the double belt press (1) is constructed for continuously pressing and heating a wood material mat (2) in order to form a wood material plate (3) and/or a laminate.

3. Double belt press according to claim 1 or 2,
**characterised in that**
the at least one polishing device (17) is provided so as to be able to be displaced transversely relative to the pressing belt (6, 7).

4. Double belt press according to any one of claims 1 to 3,
**characterised in that**
at least one, in particular fixed, motorised drive (19) is provided for displacing the polishing device (17) transversely relative to the pressing belt (6, 7).

5. Double belt press according to claim 3 or 4,
**characterised in that**
a guide rail (18) for displacing a polishing device (61) transversely relative to the pressing belt (6, 7) is provided transversely relative to a pressing belt (6, 7), and, preferably, **in that** the at least one motorised drive (19) cooperates with the guide rail (18) in order to displace the polishing device (17) transversely relative to the pressing belt (6, 7).

6. Double belt press according to any one of claims 3 to 5,
**characterised in that**
the speed of the displacement of the polishing device (17), the rotation speed of the polishing means (24) and/or the pressing pressure of a polishing means (24) against the pressing belt (6, 7) are adjustable.

7. Double belt press according to any one of claims 1 to 6,
**characterised in that**
a polishing means (24) of the polishing device is associated with a suction hood (22), in particular at least partially arranged in the suction hood (22), and, preferably, **in that** the suction hood (22) is provided with a suction socket (23) for drawing off the abraded material from the suction hood (22).

8. Double belt press according to any one of claims 1 to 7,
**characterised in that**,
in a state associated with each pressing belt (6, 7) outside the pressing gap (5), at least one polishing device (17) which polishes the outer side of the respective pressing belt (6, 7) is provided.

9. Method for continuously pressing and heating a wood material mat (2) in order to form a wood material plate (3) and/or a laminate, having a double belt press (1) according to any one of claims 1 to 8,
- wherein the wood material mat (2) and/or the laminate is supplied into a pressing gap (5) which is formed between two pressing belts (6, 7) which run continuously around at least two redirection means,
- wherein the wood material mats (2) and/or the laminate come into contact with the outer sides of the pressing belts (6, 7) and are pressed,
- wherein at least one polishing device (17) having a rotating polishing means (24) outside the pressing gap (5) at least partially removes the pressing residues (16) which adhere to the outer side of at least one pressing belt (6, 7) and polishes the outer side of the pressing belt (6, 7) and
- wherein the polishing means (24) is driven by means of at least one motorised drive (20) which can be displaced transversely relative to the pressing belt (6, 7).

10. Method according to claim 9,
wherein the wood material mat (2) in order to form the wood material plate (3) and/or the laminate is continuously pressed and heated.

11. Method according to claim 9 or 10,
- wherein the at least one polishing device (17) in order to process the at least one pressing belt (6, 7) is displaced in at least one direction, preferably back and forth, transversely relative to the pressing belt (6, 7).

12. Method according to any one of claims 9 to 11,
- wherein the displacement of the polishing device (17) transversely relative to the pressing belt (6, 7) is brought about by means of at least one, in particular fixed, motorised drive (19), and/or
- wherein the polishing device (17) is displaced along a guide rail (18) which guides, in particular retains, the polishing device (17) and which preferably cooperates with the motorised drive (19).

13. Method according to any one of claims 9 to 12,
wherein the abraded material produced by the polishing device (17) is at least partially drawn off by means of a suction hood (22) and preferably a suction socket (23) which is associated with the suction hood (22).

14. Method according to any one of claims 9 to 13,
- wherein the pressing residues (16) which adhere to the outer sides of both pressing belts (6, 7) outside the pressing gap (5) are at least partially removed by at least one polishing device (17) in each case, and
- wherein preferably the outer sides of the pressing belts (6, 7) are polished by the at least one polishing device (17).

## Revendications

1. Presse à double bande (1) pour le pressage en continu d'un tapis en un matériau à base de bois (2) afin de former une plaque en un matériau à base de bois (3) et/ou un laminé avec deux bandes de presse (6, 7) formant entre elles une fente de presse (5) et tournant en continu autour de deux moyens de renvoi, les bandes de presse (6, 7) présentant respectivement une face extérieure entrant en contact avec le tapis en un matériau à base de bois (2) et/ou le laminé et une face intérieure n'entrant pas en contact avec le tapis en un matériau à base de bois (2) et/ou le laminé, **caractérisé en ce que** l'on prévoit au moins un dispositif de polissage (17) présentant, à partir de la face extérieure d'au moins une bande de presse (6, 7), à l'extérieur de la fente de pressage (5), un agent de polissage (24) rotatif, enlevant au moins une partie des résidus de presse (16), et pouvant polir le face extérieure de la bande de presse (6, 7) et **en ce que** l'on prévoit au moins un entraînement motorisé (20) déplaçable transversalement par rapport à la bande de presse (6, 7) pour l'entraînement d'un agent de polissage (24) du dispositif de polissage (17).

2. Presse à double bande selon la revendication 1,
**caractérisée en ce qu'**au moins une bande de presse (6, 7) est conçue en tant que bande d'acier, notamment en acier inoxydable, et/ou **en ce que** la presse à double bande (1) est conçue pour le pressage en continu et le réchauffement d'un tapis en un matériau à base de bois (2) afin de former une plaque en un matériau à base de bois (3) et/ou un laminé.

3. Presse à double bande selon la revendication 1 ou 2,
**caractérisée en ce qu'**au moins un dispositif de polissage (17) est prévu d'une façon coulissante transversalement par rapport à la bande de presse (6, 7).

4. Presse à double bande selon l'une des revendications 1 à 3,
**caractérisée en ce que** l'on prévoit au moins un entraînement motorisé (19), notamment stationnaire, pour le déplacement du dispositif de polissage (17) transversalement par rapport à la bande de presse (6, 7).

5. Presse à double bande selon la revendication 3 ou 4,
**caractérisée en ce que** l'on prévoit un rail de guidage (18) transversalement par rapport à une bande de presse (6, 7) pour le déplacement d'un dispositif de polissage (61) transversalement par rapport à la bande de presse (6, 7) et, de préférence, **en ce qu'**au moins un entraînement motorisé (19) pour le déplacement du dispositif de polissage (17) transversalement par rapport à la bande de presse (6, 7) interagit avec le rail de guidage (18).

6. Presse à double bande selon l'une des revendications 3 à 5,
**caractérisée en ce que** la vitesse du déplacement du dispositif de polissage (17), la vitesse de rotation de l'agent de polissage (24) et/ou la pression d'appui d'un agent de polissage (24) contre la bande de presse (6, 7) sont réglables.

7. Presse à double bande selon l'une des revendications 1 à 6,
**caractérisée en ce qu'**un agent de polissage (24) est associé au dispositif de polissage d'une hotte aspirante (22), est agencé, notamment, au moins partiellement, dans la hotte aspirante (22), et, de préférence, **en ce que** l'on prévoit la hotte aspirante (22) avec une tubulure d'aspiration (23) pour aspirer l'abrasion hors de la hotte aspirante (22).

8. Presse à double bande selon l'une des revendications 1 à 7,
**caractérisée en ce que** l'on prévoit un dispositif de polissage (17) associé à chaque bande de presse (6, 7) à l'extérieur de la fente de presse (5) pouvant polir au moins une face extérieure de la bande de presse (6, 7) respective.

9. Procédé pour le pressage en continu et le réchauffement d'un tapis en un matériau à base de bois (2) afin de former une plaque en un matériau à base de bois (3) et/ou un laminé, avec une presse à double bande (1)selon l'une des revendications 1 à 8,
- selon lequel le tapis en un matériau à base de bois (2) et/ou le laminé est amené dans une fente de presse (5) formée entre deux bandes de presse (6, 7) tournant en continu autour d'au moins deux moyens de renvoi,
- selon lequel les tapis en un matériau à base de bois (2) et/ou le laminé entrent en contact avec les faces extérieures des bandes de presse (6, 7) et sont pressés
- selon lequel au moins un dispositif de polissage (17) avec un agent de polissage (24) rotatif, enlève, au moins partiellement, les résidus de presse (16) adhérant sur la face extérieure d'au moins une bande de presse (6, 7), à l'extérieur de la fente de presse (5), et polit la face extérieure de la bande de presse (6, 7) et
- selon lequel l'agent de polissage (24) est entraîné par au moins un entraînement motorisé (20) être déplacé transversalement par rapport à la bande de presse (6, 7).

10. Procédé selon la revendication 9,
dans lequel le tapis en un matériau à base de bois (2) permettant de former une plaque en un matériau à base de bois (3) et/ou le laminé est pressé en continu et réchauffé.

11. Procédé selon la revendication 9 ou 10,
- selon lequel au moins un dispositif de polissage (17) pour le traitement d'au moins une bande de presse (6, 7) est déplacé dans au moins une direction, de préférence en un mouvement en va et vient, transversalement par rapport à la bande de presse (6, 7).

12. Procédé selon l'une des revendications 9 à 11,
- selon lequel le déplacement du dispositif de polissage (17) est provoqué transversalement par rapport à la bande de presse (6, 7) par au moins un entraînement motorisé (19), notamment stationnaire et/ou
- selon lequel le dispositif de polissage (17) est déplacé le long d'un rail de guidage (18), guidant, notamment maintenant, le dispositif de polissage (17), de préférence interagissant avec l'entraînement motorisé (19) .

13. Procédé selon l'une des revendications 9 à 12, dans lequel l'abrasion produite par le dispositif de polissage (17), est aspirée au moins partiellement par une hotte aspirante (22) et, de préférence par une tubulure d'aspiration (23) associée à la hotte d'aspiration (22).

14. Procédé selon l'une des revendications précédentes 9 à 13,
- selon lequel les résidus de presse (16) adhérant sur les faces extérieures des deux bandes de presse (6, 7) sont enlevés, au moins partiellement, à l'extérieur de la fente de presse (5), par respectivement au moins un dispositif de polissage (17) et
- selon lequel, de préférence, les faces extérieures des bandes de presse (6, 7) sont polies par respectivement au moins un dispositif de polissage (17).
